# DEMANDE DE BREVET EUROPEEN

(11) **EP 4 755 668 A1**
(43) Date de publication de la demande: **10.06.2026**
(21) Numéro de dépôt: 25220222.1
(22) Date de dépôt: 02.12.2025
(51) Int. Cl.: B60G 11/16, B60G 15/06

(54) **BUTÉE DE SUSPENSION DE VÉHICULE AUTOMOBILE**

(30) Priorité: 03.12.2024 FR 2413380
(71) Demandeur: NTN Europe, 74000 Annecy (FR)
(72) Inventeur: BONNAUDET, AURELIEN, 74000 ANNECY (FR)
(74) Mandataire: Sayettat, Julien Christian

(57) **Abrégé**

L'invention concerne une butée de suspension de véhicule automobile, comprenant une coupelle supérieure (2) et une coupelle inférieure (3) formant entre elles une interface de rotation relative, ladite coupelle inférieure comportant une paroi inférieure (4) d'appui sur laquelle un ressort (1) de suspension est destiné à venir en appui, ladite paroi d'appui présentant une portée annulaire (4a) s'étendant suivant une dimension radiale, la paroi d'appui (4) présentant un mur (6) qui s'étend axialement en saillie de la portée radiale (4a) sur une hauteur H, ladite portée radiale présentant au moins un jeu de trois bossages (7a) répartis angulairement et qui s'étendent en saillie axiale sur une hauteur h qui est inférieure à la hauteur H.

## Description

L'invention concerne une butée de suspension de véhicule automobile, notamment destinée à être intégrée dans une jambe de suspension télescopique d'une roue directrice de véhicule automobile, ainsi qu'une jambe de suspension de véhicule automobile comprenant une telle butée.

L'invention s'applique notamment à une butée de suspension comprenant une coupelle supérieure fixe destinée à être associée à la caisse du véhicule et une coupelle inférieure tournante comportant un appui pour le ressort de suspension, lesdites coupelles formant entre elles une interface de rotation relative autour d'un axe.

En particulier, la coupelle inférieure comporte une paroi inférieure présentant une portée annulaire qui s'étend sensiblement radialement, et sur laquelle la spire supérieure du ressort de suspension est en appui pour entrainer en rotation la coupelle inférieure en fonction des conditions de roulage.

Le problème qui se pose est que l'appui entre le ressort et la coupelle inférieure dépend alors de la géométrie du ressort, et notamment de celle de l'extrémité libre de sa spire supérieure qui est difficilement maitrisable dans la mesure où elle est obtenue par découpe.

En particulier, dans le cas où l'extrémité libre est disposée en saillie supérieure par rapport à la continuité de la spire supérieure, l'appui peut être réalisé essentiellement en un seul point au niveau de ladite extrémité libre, ce qui entraîne un mauvais équilibre de l'appui du ressort.

Un tel déséquilibre d'appui cause notamment un défaut d'alignement des coupelles, qui peut à terme engendrer des défauts de fonctionnement (rotation, bruit...), voire une usure prématurée de la butée.

L'invention vise à perfectionner l'art antérieur en proposant notamment une butée de suspension dans laquelle la coupelle inférieure est agencée pour améliorer l'équilibre de l'appui du ressort de suspension sur elle, afin de garantir un bon fonctionnement de ladite butée.

A cet effet, selon un premier aspect, l'invention propose une butée de suspension de véhicule automobile, ladite butée comprenant une coupelle supérieure et une coupelle inférieure formant entre elles une interface de rotation relative desdites coupelles autour d'un axe, ladite coupelle inférieure comportant une paroi inférieure d'appui sur laquelle un ressort de suspension est destiné à venir en appui, ladite paroi d'appui présentant une portée annulaire s'étendant suivant une dimension radiale, la paroi d'appui présentant un mur qui s'étend axialement en saillie de la portée radiale sur une hauteur H, ladite portée radiale présentant au moins un jeu de trois bossages répartis angulairement et qui s'étendent en saillie axiale sur une hauteur h qui est inférieure à la hauteur H.

Selon un second aspect, l'invention propose une jambe de suspension de véhicule automobile comprenant une telle butée de suspension et un ressort de suspension ayant une spire supérieure présentant une extrémité libre, ladite spire étant disposée en appui axial sur les bossages d'un jeu de la portée radiale et l'extrémité libre de la spire étant en butée angulaire sur le mur axial.

D'autres particularités et avantages de l'invention apparaîtront dans la description qui suit, faite en référence aux figures jointes, dans lesquelles :
[Fig.1] représente en perspective l'extrémité supérieure d'une jambe de suspension selon l'invention, montrant un ressort de suspension disposé en appui sous la coupelle inférieure d'une butée ;
[Fig.2] représente en perspective vue de dessous la coupelle inférieure de la butée de suspension de la figure 1 ;
[Fig.3] représente en perspective vue de dessous une butée de suspension selon un autre mode de réalisation de l'invention,
[Fig.3a] représentant partiellement en coupe une partie du surmoulage de l'élément de filtration sur la paroi d'appui de la coupelle inférieure de ladite butée, centrée sur un bossage de ladite paroi d'appui ;
[Fig.4a] et
[Fig.4b] représentent chacune, en perspective vue de dessous et suivant des dispositions angulaires différentes, la coupelle inférieure d'une butée de suspension selon un autre mode de réalisation de l'invention.

En relation avec ces figures, on décrit ci-dessous une butée de suspension, notamment destinée à être intégrée dans une jambe de suspension d'un véhicule automobile, par exemple une jambe télescopique d'une roue directrice dudit véhicule automobile.

Une jambe de suspension comprend classiquement un amortisseur, un ressort 1 de suspension, ainsi qu'une butée de suspension sur laquelle le ressort 1 vient en appui, une roue du véhicule automobile étant montée sur le châssis par l'intermédiaire d'une telle jambe qui permet la suspension de la caisse relativement au sol.

La butée de suspension comprend une coupelle supérieure fixe 2 destinée à être associée à la caisse du véhicule, notamment via un bloc filtrant, et une coupelle inférieure tournante 3, lesdites coupelles formant entre elles une interface de rotation relative autour d'un axe A.

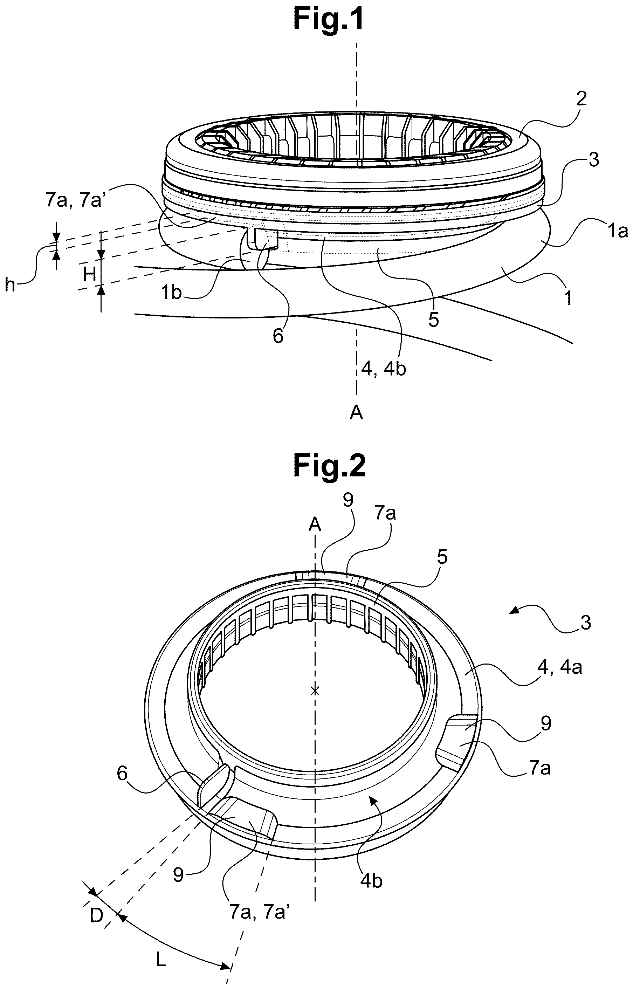

Dans cette description, les termes de positionnement dans l'espace sont pris en référence à l'axe A de rotation de la butée de suspension (vertical sur la figure 1). En particulier :
- les termes « intérieur » et « extérieur » sont relatifs à une disposition respectivement proche et à distance de cet axe A ;
- les termes « axial » et « radial » sont relatifs à une disposition respectivement suivant cet axe A et s'éloignant ou se rapprochant de lui.

Par ailleurs, les termes « supérieur » ou « dessus » et « inférieur » ou « dessous » sont relatifs à la disposition de la butée telle que représentée sur la figure 1.

De façon connue, l'interface de rotation peut comprendre des corps roulants qui sont disposés entre les coupelles 2, 3 afin de permettre leur rotation relative autour de l'axe A. Pour ce faire, les coupelles supérieure 2 et inférieure 3 peuvent comprendre chacune une rondelle, notamment réalisée en tôle emboutie, formant entre elles l'interface de rotation, chacune desdites rondelles étant pourvue d'une piste de roulement respectivement inférieure et supérieure entre lesquelles les corps roulants sont disposés.

En variante, les coupelles 2, 3 peuvent être montées en rotation relative de façon lisse, avec ou sans interposition d'une rondelle de friction dans l'interface de rotation.

La coupelle inférieure 3 comporte une paroi inférieure 4 d'appui, sur laquelle le ressort 1 de suspension est destiné à venir en appui. En particulier, comme représenté sur la figure 1, le ressort 1 comprend une spire supérieure 1a qui vient en appui axial sur la paroi inférieure 4.

Ainsi, lorsque le ressort 1 est sollicité en compression et en détente, l'enroulement des spires 1a de ce dernier sur elles-mêmes est modifié, ce qui entraîne la rotation de la coupelle inférieure 3. En outre, le braquage des roues induit également une rotation de la coupelle inférieure 3.

Les coupelles 2, 3 permettent notamment une reprise des efforts du ressort 1 et éventuellement de ceux de la butée de choc. A cet effet, les coupelles 2, 3 sont réalisées en un matériau suffisamment rigide, notamment en matériau thermoplastique, par exemple de type polyamide, de préférence le polyamide 6.6, éventuellement chargé fibres de verre.

De façon avantageuse, les coupelles 2, 3 peuvent être réalisées par moulage, notamment en matériau thermoplastique tel que décrit précédemment, afin d'en faciliter la fabrication, et ainsi de réduire les coûts globaux de production de la butée de suspension.

En relation avec les figures, la coupelle inférieure 3 présente un manchon axial 5 autour duquel la spire supérieure 1a du ressort 1 est enroulée, la paroi d'appui 4 présentant une portée annulaire 4a qui s'étend extérieurement suivant une direction radiale, et en regard axial de laquelle ladite spire supérieure vient en appui.

En particulier, la paroi d'appui 4 présente une portée intérieure 4b courbe de raccordement du manchon 5 à la portée radiale extérieure 4a, ladite portée intérieure présentant de préférence un rayon de courbure sensiblement égal au rayon de courbure de la spire supérieure 1a, afin de permettre à ladite spire d'épouser ladite portée intérieure lors de son enroulement autour du manchon 5.

Pour garantir un maintien optimal de la spire supérieure 1a sur elle, la paroi d'appui 4 présente un mur 6 qui s'étend axialement en saillie de la portée radiale 4a sur une hauteur H, et sur lequel une extrémité libre 1b de ladite spire vient en butée angulaire lors du montage du ressort 1 sous la coupelle inférieure 3.

Cet agencement permet de caler la spire supérieure 1a sur la paroi d'appui 4, en limitant les risques de déplacement intempestif de son extrémité libre 1b. Ainsi, on évite les risques de dégradation de la paroi d'appui 4 par l'extrémité libre 1b du ressort 1 lors des déplacements relatifs des coupelles 2, 3.

En particulier, le mur 6 peut présenter toute forme géométrique pouvant accueillir l'extrémité 1b du ressort 1, avec un dimensionnement suffisant pour supporter les efforts maximaux prévus en fonctionnement.

La portée radiale 4a présente en outre au moins un jeu de trois bossages 7a, 7b qui sont répartis angulairement sur ladite portée radiale, en s'étendant en saillie axiale sur une hauteur h qui est inférieure à la hauteur H du mur 6.

Ces bossages 7a, 7b forment trois points de contact sur chacun desquels la spire supérieure 1a d'un ressort 1 est destinée à venir en appui axial lors du montage dudit ressort sous la coupelle inférieure 3, ce qui garantit un bon équilibre dudit appui, et ainsi un bon alignement des coupelles 2, 3 pour assurer un fonctionnement optimal de la butée.

De façon avantageuse, les bossages 7a, 7b sont agencés, tant par leur géométrie, leur disposition et/ou leur répartition angulaire sur la portée radiale 4a, de manière à ce que l'extrémité libre 1b de la spire 1a ne soit pas en appui sur ladite portée radiale, afin d'éviter la dépendance de l'appui du ressort à la géométrie de ladite extrémité libre.

Pour ce faire, dans les modes de réalisation représentés, chaque jeu comprend notamment un bossage 7a', 7b' qui est disposé à une distance angulaire du mur 6 qui est inférieure à 10°, et notamment inférieure à 5°, afin que la spire supérieure 1a vienne en appui axial sur ledit bossage à proximité de son extrémité libre 1b qui est butée angulaire contre ledit mur.

Chaque jeu de bossages 7a, 7b s'étend sur la portée radiale 4a sur une plage angulaire suffisamment importante pour assurer une répartition équilibrée des appuis axiaux de la spire 1a, ladite plage angulaire étant notamment comprise entre 200° et 260°. Pour les mêmes raisons, les bossages 7a, 7b sont équirépartis angulairement sur la portée radiale 4a.

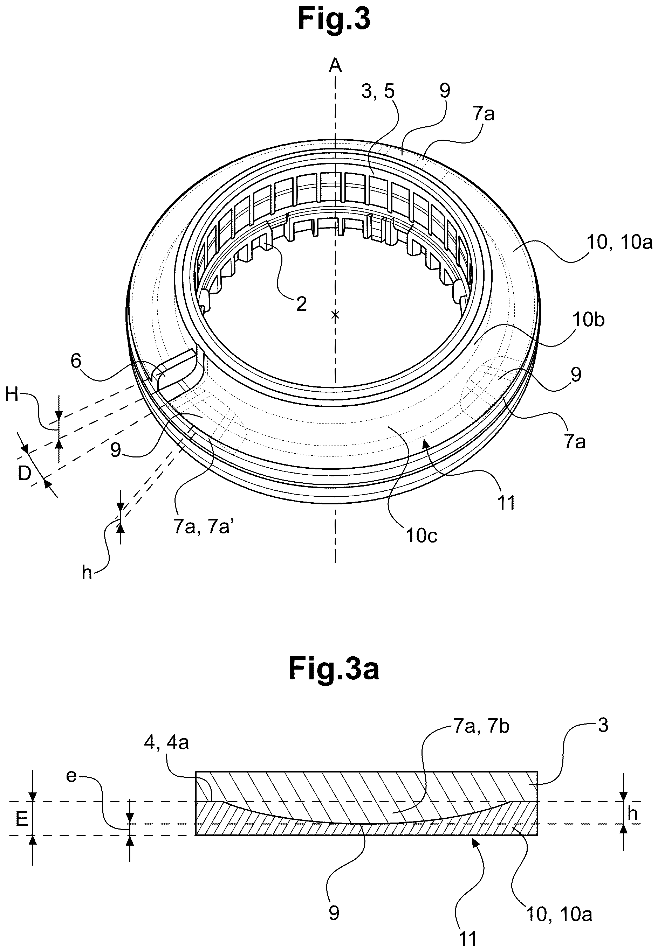

Sur les figures 2 et 3, la portée radiale 4a comprend un unique jeu de trois bossages 7a qui s'étendent sur ladite portée radiale suivant une plage angulaire de l'ordre de 240°, les zones médianes de deux bossages 7a adjacents étant espacées d'une distance angulaire de l'ordre de 100°.

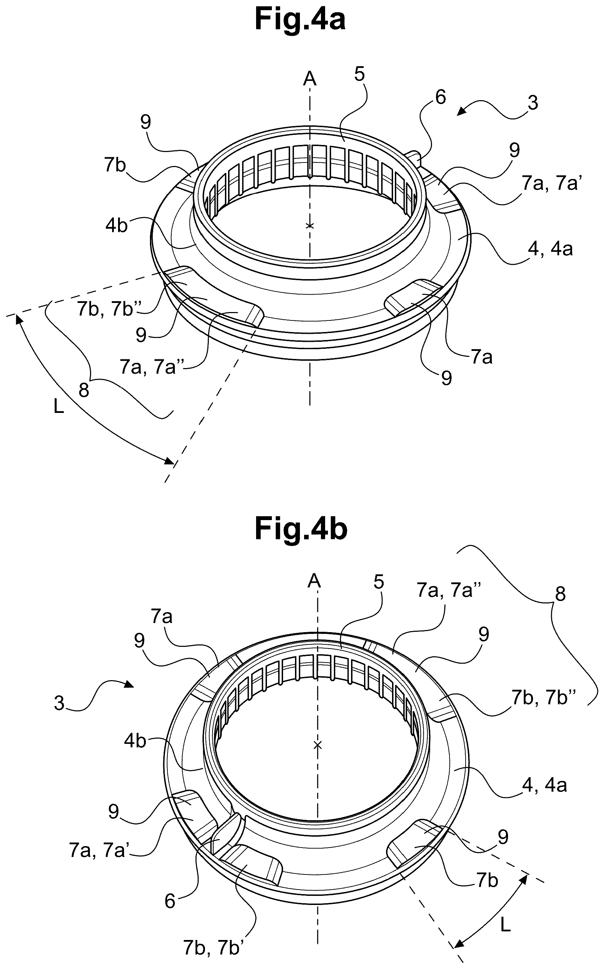

Sur les figures 4a et 4b, la portée radiale 4a présente deux jeux de trois bossages 7a, 7b qui s'étendent angulairement respectivement de part et d'autre du mur axial 6, chacun suivant une plage angulaire de l'ordre de 225°, les zones médianes de deux bossages 7a, 7b adjacents d'un même jeu étant espacées d'une distance angulaire de l'ordre de 72,5°.

L'agencement des figures 4a et 4b permet de disposer d'une coupelle inférieure 3 qui est adaptée pour le montage de ressorts 1 présentant des sens d'enroulement différents de leurs spires 1a. Ainsi, selon la latéralité de l'enroulement d'un ressort 1 (gauche ou droit), la spire supérieure 1a dudit ressort sera disposée en appui contre l'un ou l'autre des jeux de bossages 7a, 7b.

En particulier, les bossages 7a, 7b des deux jeux sont répartis symétriquement de part et d'autre du mur axial 6, et chacun desdits jeux comprend un bossage 7a", 7b" diamétralement opposé audit mur.

Pour améliorer l'appui axial de la spire 1a sur eux, chaque bossage 7a, 7b s'étend angulairement suivant une longueur L de dimension importante, notamment supérieure à sa hauteur h, notamment au moins 5 fois supérieure.

En particulier, sur les figures 4a et 4b, les bossages 7a", 7b" diamétralement opposés au mur 6 sont joints angulairement pour former un bossage 8 commun qui s'étend angulairement suivant une longueur L doublée par rapport à la longueur L des bossages individuels 7a, 7b.

De façon avantageuse, les bossages individuels 7a, 7b s'étendent chacun angulairement suivant une longueur L de l'ordre de 25°, le bossage commun 8 s'étendant suivant une longueur L de l'ordre de 50°.

Par ailleurs, chaque bossage 7a, 7b, 8 présente une surface inférieure 9 sur laquelle la spire supérieure 1a du ressort 1 est destinée à venir directement en appui, ladite surface inférieure étant plane et s'étendant radialement.

Sur les figures 3 et 3a, la paroi d'appui 4 est recouverte d'un élément 10 de filtration qui est réalisé à base d'un matériau plus souple que le matériau formant ladite paroi, notamment un matériau élastomère de type TPU ou TPE, afin de filtrer les efforts induits par l'appui axial du ressort 1.

En particulier, l'élément de filtration 10 comprend une couronne 10a qui est disposée sur la portée radiale 4a pour en recouvrir les bossages 7a, 7b, ladite couronne présentant une épaisseur qui est variable de manière à présenter une surface inférieure 11 plane qui s'étend radialement.

En relation avec la figure 3a, l'épaisseur e de la couronne 10a sur les bossages 7a, 7b est comprise entre 40% et 60% de l'épaisseur E de ladite couronne entre lesdits bossages.

Cet agencement permet de disposer d'une déformabilité moins importante au niveau des bossages, afin de concentrer les efforts axiaux exercés par l'appui du ressort 1 au niveau desdits bossages.

L'élément de filtration 10 comprend en outre une jupe axiale 10b destinée à recouvrir extérieurement le manchon 5 de la coupelle inférieure 3, ainsi qu'une couronne intermédiaire 10c de raccordement de ladite jupe axiale à la couronne 10a de recouvrement des bossages 7a, 7b, ladite couronne intermédiaire présentant une géométrie courbe agencée pour épouser la portée 4b de raccordement du manchon 5 à la portée d'appui 4a.

De façon avantageuse, l'élément de filtration 10 est obtenu par surmoulage sur la coupelle inférieure 3, ce qui permet d'en faciliter la fabrication.

## Revendications

1. Butée de suspension de véhicule automobile, ladite butée comprenant une coupelle supérieure (2) et une coupelle inférieure (3) formant entre elles une interface de rotation relative desdites coupelles autour d'un axe (A), ladite coupelle inférieure comportant une paroi inférieure (4) d'appui sur laquelle un ressort (1) de suspension est destiné à venir en appui, ladite paroi d'appui présentant une portée annulaire (4a) s'étendant suivant une dimension radiale, ladite butée étant **caractérisée en ce que** la paroi d'appui (4) présente un mur (6) qui s'étend axialement en saillie de la portée radiale (4a) sur une hauteur H, ladite portée radiale présentant au moins un jeu de trois bossages (7a, 7b) répartis angulairement et qui s'étendent en saillie axiale sur une hauteur h qui est inférieure à la hauteur H.

2. Butée de suspension selon la revendication 1, **caractérisée en ce que** le jeu de bossages (7a, 7b) s'étend sur la portée radiale (4a) sur une plage angulaire comprise entre 200° et 260°.

3. Butée de suspension selon l'une des revendications 1 ou 2, **caractérisée en ce que** les bossages (7a, 7b) d'un jeu sont équirépartis angulairement sur la portée radiale (4a).

4. Butée de suspension selon l'une quelconque des revendications 1 à 3, **caractérisée en ce que** chacun des bossages (7a, 7b) s'étend angulairement sur une longueur L qui est supérieure à sa hauteur h.

5. Butée de suspension selon l'une quelconque des revendications 1 à 4, **caractérisée en ce que** chacun des bossages (7a, 7b) présente une surface inférieure plane (9) qui s'étend radialement.

6. Butée de suspension selon l'une quelconque des revendications 1 à 5, **caractérisée en ce qu'**un bossage (7a', 7b') est disposé à une distance angulaire D du mur (6) qui est inférieure à 10°, notamment inferieure à 5°.

7. Butée de suspension selon l'une quelconque des revendications 1 à 6, **caractérisée en ce que** la paroi d'appui (4) est recouverte d'un élément de filtration (10) qui est réalisé à base d'un matériau plus souple que le matériau formant ladite paroi.

8. Butée de suspension selon la revendication 7, **caractérisée en ce que** l'élément de filtration (10) présente une couronne (10a) de recouvrement des bossages (7a, 7b), ladite couronne ayant une épaisseur variable pour présenter une surface inférieure plane (11) qui s'étend radialement.

9. Butée de suspension selon l'une des revendications 7 ou 8, **caractérisé en ce que** l'élément de filtration (10) est réalisé à base d'un matériau élastomère par exemple de type TPU ou de TPE, la coupelle inférieure (3) étant réalisée à base d'un matériau thermoplastique par exemple de type polyamide, éventuellement chargé en fibres de verre.

10. Butée de suspension selon l'une quelconque des revendications 7 à 9, **caractérisée en ce que** la coupelle inférieure (3) est obtenue par moulage, l'élément de filtration (10) étant surmoulé sur ladite coupelle.

11. Butée de suspension selon l'une quelconque des revendications 1 à 10, **caractérisée en ce que** la portée radiale (4a) présente deux jeux de trois bossages (7a, 7b) s'étendant angulairement respectivement de part et d'autre du mur axial (6).

12. Butée de suspension selon la revendication 11, **caractérisée en ce que** les bossages (7a, 7b) sont répartis symétriquement de part et d'autre du mur axial (6).

13. Butée de suspension selon l'une des revendications 11 ou 12, **caractérisée en ce que** chacun des jeux comprend un bossage (7a", 7b") diamétralement opposé au mur (6), lesdits bossages étant joints pour former un bossage commun (8) de longueur L doublée.

14. Jambe de suspension de véhicule automobile comprenant une butée de suspension selon l'une quelconque des revendications 1 à 13 et un ressort (1) de suspension ayant une spire supérieure (1a) présentant une extrémité libre (1b), ladite spire étant disposée en appui axial sur les bossages (7a, 7b) d'un jeu de la portée radiale (4a) et l'extrémité libre (1b) de la spire (1a) étant en butée angulaire sur le mur axial (6).

15. Jambe de suspension selon la revendication 14, **caractérisée en ce que** les bossages (7a, 7b) sont agencés pour que l'extrémité libre (1b) de la spire (1a) ne soit pas en appui sur la portée radiale (4a).
